# EUROPÄISCHE PATENTANMELDUNG

(11) **EP 0 704 694 A1**
(43) Veröffentlichungstag der Anmeldung: **03.04.1996**
(21) Anmeldenummer: 95114631.5
(22) Anmeldetag: 18.09.1995
(51) Int. Cl.: G01N 21/88

(54) **Verfahren und Vorrichtung zur Qualitätskontrolle von Gegenständen mit polarisiertem Licht**

(30) Priorität: 27.09.1994 DE 4434473
(71) Anmelder: Basler GmbH, D-22926 Ahrensburg (DE)
(72) Erfinder: Basler,Norbert, D-22955 Hoisdorf (DE); Klicker,Jürgen,Dr., D-22955 Hoisdorf (DE); Ley,Dietmar,Dr., D-22926 Ahrensburg (DE)
(74) Vertreter: Jaeschke, Rainer

(57) **Zusammenfassung**

Die Erfindung betrifft ein Verfahren und eine Vorrichtung zur Qualitätskontrolle eines Gegenstandes (10), der wenigstens eine lichtdurchlässige Schicht (18) aufweist. Bei dem Verfahren und der Vorrichtung wird wenigstens ein Lichtstrahl (41) einer Lichtquelle (42) in einem Winkel (α) auf den Gegenstand (10) aufgebracht und von wenigstens einem lichtempfindlichen Empfänger (53) aufgenommen. Zur Sichtbarmachung von mikrostrukturellen Fehlern, sogenannten Wolken, sowie zur Sichtbarmachung von inneren Spannungen unabhängig von der Vorzugsrichtung der verursachten Doppelbrechung ist vorgesehen, daß der Lichtstrahl (41) hinter der Lichtquelle (42) daß der Lichtstrahl hinter der Lichtquelle durch eine Polarisationseinrichtung zumindest in einem Wellenlängenbereich polarisiert wird und das von dem Gegenstand kommende Licht vor dem lichtempfindlichen Empfänger eine korrespondierende Polarisationseinrichtung durchläuft, die so ausgerichtet ist, daß ein Lichtdurchgang bei nicht vorhandener Doppelbrechung stattfindet.

## Beschreibung

Die Erfindung betrifft ein Verfahren und eine Vorrichtung zur Qualitätskontrolle eines Gegenstandes, der wenigstens eine lichtdurchlässige Schicht aufweist, bei welchem Verfahren beziehungsweise welcher Vorrichtung wenigstens ein Lichtstrahl einer Lichtquelle in einem Winkel auf den Gegenstand aufgebracht und von wenigstens einem lichtempfindlichen Empfänger aufgenommen wird. Grundsätzlich kann der Lichtstrahl an einer hinter der lichtdurchlässigen Schicht angeordneten verspiegelten Schicht des Gegenstandes reflektiert werden oder durch diesen hindurchtreten, so daß von dem lichtempfindlichen Empfänger entweder der reflektierte oder der hindurchgehende Lichtstrahl aufgenommen wird. Im folgenden wird der Einfachheit halber lediglich von einem an dem Gegenstand reflektierten oder hindurchgehenden oder von einem von dem Gegenstand kommenden Lichtstrahl gesprochen. Die Erfindung bezieht sich insbesondere auf die optische Qualitätskontrolle einer Compact-Disc (CD), so daß im folgenden überwiegend von einer CD die Rede ist, ohne daß damit eine Beschränkung verbunden sein soll.

In letzter Zeit haben sich CD's immer mehr durchgesetzt, da sie zum einen bei der Verwendung im Hausgebrauch als Tonträger eine sehr hohe Klangqualität hervorbringen können. Zum anderen eignen sie sich wegen der hohen möglichen Datendichte auch für die Verwendung als reiner Datenträger in der Datenverarbeitung. Nicht zuletzt ist die immer weitere Verbreitung der CD's auch auf die relative Unempfindlichkeit gegen äußere Einwirkungen zurückzuführen. Dies führt schließlich dazu, daß es sich bei einer CD um ein ausgesprochenes Massenprodukt handelt, das jedoch hohen bis höchsten Qualitätsanforderungen genügen muß.

Es sind eine Vielzahl von Meßverfahren für die unterschiedlichsten Fehler, die bei der Herstellung einer CD auftreten können, bekannt. Aufgrund des physikalischen Aufbaus einer CD, nämlich einer lichtdurchlässigen Schicht und einer dahinter angeordneten verspiegelten Schicht, eignen sich insbesondere optische Meßverfahren und Meßvorrichtungen, die auch Gegenstand dieser Erfindung sind.

Zunächst wird im folgenden der Aufbau und die Herstellung einer CD und die möglichen Fehler, die auftreten können, beschrieben. Eine CD besteht aus einer kreisrunden Scheibe, die in ihrer Mitte ein Loch für die Zentrierung in einem Abspielgerät besitzt. Die Scheibe besteht, im Querschnitt von unten, d. h. von der Leseseite des Abspielgerätes her gesehen, nach oben, aus einer lichtdurchlässigen Kunststoffschicht, im allgemeinen aus Polycarbonat, in der bereits alle Informationen in Form von Vertiefungen (Pits) enthalten sind. Darauf ist eine metallische Schicht, in der Regel Aluminium, zum Verspiegeln der Oberfläche der Polycarbonatschicht angeordnet, damit die Informationen durch das optische Abtastsystem des Abspielgerätes gelesen werden können. Die sehr dünne metallische Schicht wird durch eine ebenfalls sehr dünne Lackschicht geschützt, die im allgemeinen durch UV-Licht ausgehärtet wird. Auf dieser Lackschicht können dann Beschriftungen oder dergleichen zur Kennzeichnung der CD vorhanden sein.

In radialer Richtung kann man bei einer CD mehrere koaxiale, kreisringförmige Bereiche vom Kernloch ausgehend nach außen unterscheiden. Unmittelbar am Kernloch befindet sich der Bereich, der zum Einspannen der CD in dem Abspielgerät dient. Daran schließt sich ein Bereich an, in dem der sogenannte Ident-Code eingeprägt ist, anhand dessen die CD eindeutig identifiziert werden kann. Anschließend folgt der Bereich, der zur eigentlichen Datenspeicherung dient. Falls die CD bis zu ihrer maximalen Speicherkapazität bespielt ist, endet der Bereich unmittelbar am äußeren Randbereich. Andernfalls ist zwischen dem Randbereich der CD und dem Datenbereich noch das sogenannte Lead-Out oder ein Spiegelband angeordnet.

Bei der Herstellung wird zunächst ein Rohling aus Polycarbonat im Druckgußverfahren hergestellt, wobei durch die Matrize bereits alle Informationen eingeprägt werden. Anschließend wird die eine Oberfläche des Rohlings mit der metallischen Spiegelschicht im Sputterverfahren versehen und mit der Lackschicht versiegelt. Um eine gleichförmige Verteilung der Aluminium- und der Lackschicht zu erhalten und um eine möglichst dünne Schicht zu erzielen, wird die CD bei diesen Vorgängen zentrifugiert. Anschließend erfolgt das Bedrucken der CD mit dem Label.

Es ist offensichtlich, daß aufgrund der hohen Datendichte auf der CD, die optisch gelesen wird, die verspiegelte Schicht und der lichtdurchlässige Polycarbonatkörper hinsichtlich ihrer optischen Eigenschaften einwandfrei sein müssen. Insbesondere im Datenbereich können bereits kleinste Fehler ausreichen, um das Ablesen teilweise erheblich zu stören, wodurch insbesondere bei der Verwendung in der Datenverarbeitung unakzeptable Abweichungen bewirkt werden können. Es ist daher zweckmäßig und erforderlich, in den Produktionsprozeß eine Qualitätskontrolle einzuführen, mit welcher die möglichen Fehler einer CD entdeckt werden und klassifiziert werden können, so daß eine anschließende Aussonderung der defekten CD's oder ein Eingriff in den Produktionsvorgang erfolgen kann.

Als Fehler können auftreten: Löcher in der Spiegelschicht, sogenannte Pinholes, die dadurch entstehen, daß vor dem Sputterprozeß ein Staubkorn oder dergleichen auf der Oberfläche vorhanden war, das während des Zentrifugierens der CD nach außen geschleudert wird und ein Stück der metallischen Oberfläche mitreißt. Alukratzer treten dann auf, wenn das Staubkorn auf seinem Weg nach außen noch auf der Oberfläche verbleibt und somit weitere Schäden in der metallischen Schicht verursacht. Unterhalb der Metallschicht können organische Rückstände, beispielsweise Ölflecken, zu Abtastfehlern führen. Falls der Polycarbonatrohling auf seiner zu beschichteten Oberfläche deformiert ist, entstehen sogenannte Pickel. Als schwarze Punkte werden Fremdkörpereinschlüsse in der Polycarbonatschicht bezeichnet. In der Polycarbonatschicht können auch Bläschen, Lufteinschlüsse oder dergleichen vorhanden sein. Ferner können auf der Unterseite der CD Lackspritzer oder durch mechanische Einwirkungen verursachte Kratzer zu Ablesefehlern oder Qualitätseinbußen führen.

Diese Fehler verursachen in Abhängigkeit von ihrer Größe stets optische Abweichungen, die durch die bekannten Prüfgeräte in der Regel erfaßt werden können. Für eine Klassifikation der Fehler ist es weiterhin erforderlich, die Tiefe der jeweiligen Fehler festzustellen. Es sind daher Meßverfahren und Meßvorrichtungen erforderlich und auch bekannt, die den Fehler dreidimensional erfassen können. In Abhängigkeit von der Datendichte ist es weiterhin erforderlich, das Prüfungsverfahren zumindest im Datenbereich mit einer hohen Prüfschärfe durchzuführen, d. h. daß eine Ortsauflösung in einem Bereich von 30 µm bis 50 µm erreicht werden muß. Außerhalb des Datenbereiches sind lediglich Fehler von Interesse, die die optische Erscheinung der CD beeinflussen. Hier würde eine geringere Prüfschärfe, beispielsweise mit einer Ortsauflösung des menschlichen Auges um etwa 200 µm, ausreichen.

Weiterhin können bei einer CD noch optische Verzerrungen durch eine beispielsweise konvexe oder konkave Verformung der CD erfolgen. Auch führen innere Spannungen in der Polycarbonatschicht zu Ablesefehlern, da Polycarbonat ein unter Spannung optisch aktives Material ist, so daß das Phänomen der Doppelbrechung auftritt. Dies hat zur Folge, daß das in der Regel polarisierte Licht des Abtastlasers des Abspielgerätes eine unerwünschte Änderung der Polarisation aufgrund dieser akzidentiellen Doppelbrechung erhalten würde. Ferner führen auch Fehler in der Mikrostruktur der Polycarbonatschicht häufig zu Lesefehlern. Die Ursache dieser sogenannten Wolken liegt häufig in der Preßmatrize, so daß beim Auftreten einer Wolke davon ausgegangen werden muß, daß ein Systemfehler vorliegt.

Für die Erfassung der erstgenannten Fehlergruppe sind Meßverfahren und Meßvorrichtungen bekannt, bei welchen ein linienförmiger Lichtstrahl auf die Unterseite in einem spitzen Winkel aufgebracht wird, an der verspiegelten Schicht reflektiert und von einer sogenannten Zeilenkamera aufgenommen wird. Der Fehler erscheint in der Kamera als dunkler Fleck. Die CD wird während des Prüfvorgangs einmal gedreht, so daß die gesamte CD beleuchtet wird und auf eventuelle Fehler hin untersucht werden kann. Aufgrund der eindeutigen Geometrie und der vorgegebenen Drehung der CD kann gleichzeitig auf die Tiefe eines Fehlers geschlossen werden, da während der Drehbewegung derselbe Fehler zweimal an der gleichen Stelle auftaucht, und der Fehler daher einmal im einfallenden Lichtstrahl und einmal im ausfallenden Lichtstrahl liegt. Das Erscheinungsbild einer Wolke kann jedoch mit den bisherigen Meßverfahren zur Zeit nicht zuverlässig erkannt werden.

Es ist auch möglich, daß der Rohling der CD vor dem Sputterprozeß im Durchlichtverfahren geprüft wird. Hier befinden sich die Lichtquelle und der lichtempfindliche Empfänger auf gegenüberliegenden Seiten der CD.

Zum Nachweis von inneren Spannungen wird der Lichtstrahl hinter der Lichtquelle durch einen Polfilter linear polarisiert, während vor der Kamera ebenfalls ein linearer Polfilter angeordnet ist. In der Regel sind die Polfilter um 90° gegeneinander verdreht angeordnet. Die Kamera bleibt dann im Falle einer einwandfreien CD, also bei einer CD ohne innere Spannungen, vollkommen dunkel, da das polarisierte Licht beim Durchgang durch die Polycarbonatschicht nicht verändert worden ist. Ansonsten stellt die in der Kamera beobachtete Helligkeit ein Maß für die inneren Spannungen dar.

Bei der Beleuchtung mit linear polarisiertem Licht können jedoch nicht alle inneren Spannungen, die zu Abtastfehlern führen, erkannt werden. Dies ist darin begründet, daß die innere Spannung eine Doppelbrechung mit einer Vorzugsrichtungen verursacht, die von einem linear polarisierten Licht in Abhängigkeit von der Polarisationsrichtung gegebenenfalls nicht erkannt werden würde. Es kann daher sein, daß eine durch das herkömmliche Meßverfahren als einwandfrei klassifizierte CD dennoch innere Spannung aufweist.

Verformungen einer CD werden dadurch ermittelt, daß ein punktförmiger Lichtstrahl, meistens aus einer Halbleiterlichtquelle, auf die Unterseite der CD aufgebracht wird und in Richtung auf eine positionsempfindliche Photodiode reflektiert wird. Derartige Photodioden können beispielsweise als Vier-Quadranten-Dioden ausgebildet sein. Im Falle einer ebenen CD wird der Lichtstrahl auf einen bestimmten Bereich der Photodiode reflektiert, während er bei einer beispielsweise konvexen oder konkaven CD abgelenkt und einen anderen Quadranten der Photodiode belichten würde. Das Ausmaß der Ablenkung kann hierbei als ein Ausmaß der Verformung herangezogen werden. Der Nachteil dieses Verfahrens ist darin zu sehen, daß die CD lediglich entlang eines Durchmessers geprüft wird. Hut- oder wulstförmige Verformungen können nicht erfaßt werden, sofern der Lichtstrahl auf die ansonsten ebene CD auftrifft.

Ein Nachteil bekannter Verfahren ist ferner darin zu sehen, daß für unterschiedliche Meßprobleme mehrere Verfahrensschritte erfoderlich sind. Dies liegt unter anderem daran, daß bei einer bekannten Prüfung auf Doppelbrechung der lichtempfindliche Empfänger bei einem einwandfreien Gegenstand dunkel bleibt und somit für weitere Auswertungen nicht zur Verfügung steht.

Der Erfindung liegt die Aufgabe zugrunde, ein Meßverfahren und eine Meßvorrichtung zu schaffen, mit welchen mehrere Meßprobleme mit nur einem lichtempfindlichen Empfänger erfaßt werden können. Weiterhin soll erreicht werden, daß die inneren Spannungen in dem zu untersuchenden Gegenstand unabhängig von der Vorzugsrichtung der verursachten Doppelbrechung sichtbar gemacht werden können.

Diese Aufgabe wird gemäß der Erfindung dadurch gelöst, daß der Lichtstrahl hinter der Lichtquelle zumindest in einem Wellenlängenbereich polarisiert wird und das von dem Gegenstand kommende Licht vor dem lichtempfindlichen Empfänger eine korrespondierende Polarisationseinrichtung durchläuft, die so ausgerichtet ist, daß ein Lichtdurchgang bei einem einwandfreien, daß heißt hinsichtlich der Doppelbrechung nicht zu beanstandenen, Gegenstand stattfindet. Dies hat den Vorteil, daß auf dem lichtempfindlichen Empfänger weitere Fehlerphänomene sichtbar werden und ausgewertet werden können, auch wenn der Gegenstand hinsichtlich der Doppelbrechung einwandfrei ist. Es kann dabei so vorgegangen werden, daß aus dem Lichtstrahl vor dem Eintritt in den lichtempfindlichen Empfänger derjenige Anteil ausgefiltert wird, dessen Polarisationsart der Polarisationsart des gesendeten Lichts entspricht.

Grundsätzlich ist eine lineare Polarisierung des Lichtes durch ein entsprechendes Polfilter möglich. Es ist aber auch möglich, daß der Lichtstrahl durch ein lineares Polfilter und eine λ/4-Platte in zumindest einem Wellenlängenbereich zirkular polarisiert wird, wobei vor dem lichtempfindlichen Empfänger eine entsprechende Anordnung der Verzögerungsplatte und des linearen Polfilters vorgesehen ist. Es hat sich in überraschender Weise gezeigt, daß durch zirkular polarisiertes Licht die Fehler in der Mikrostruktur, die sogenannten Wolken, auf dem lichtempfindlichen Empfänger gut sichtbar sind und eindeutig klassifiziert werden können.

Es hat sich weiterhin gezeigt, daß durch zirkular polarisiertes Licht auch inneren Spannungen unabhängig von der Vorzugsrichtung der verursachten Doppelbrechung sichtbar gemacht werden können. Dazu ist gemäß der Erfindung vorgesehen, daß aus dem Lichtstrahl vor dem Eintritt in wenigstens einen lichtempfindlichen Empfänger derjenige Anteil ausgefiltert wird, dessen Polarisationsart der Polarisationsart des gesendeten Lichts entspricht. Dabei kann es für eine kontraststarke Abbildung zweckmäßig sein, daß aus dem Lichtstrahl vor dem Eintritt in wenigstens einen lichtempfindlichen Empfänger derjenige Wellenlängenbereich ausgefiltert wird, dessen Wellenlänge dem zirkular polarisierten Wellenlängenbereich des gesendeten Lichts entspricht. Dadurch werden auch innere Spannungen unabhängig von der Vorzugsrichtung der verursachten Doppelbrechung auf dem betreffenden lichtempfindlichen Empfänger, bzw. auf dem damit in Verbindung stehenden Bildschirm, angezeigt.

Es kann zweckmäßig sein, wenn der Lichtstrahl durch ein lineares Polfilter und eine Verzögerungsplatte, beispielsweise eine λ/4-Platte, elliptisch polarisiert wird, wobei vor dem lichtempfindlichen Empfänger eine entsprechende Anordnung der Verzögerungsplatte und des linearen Polfilters vorgesehen ist. Dies hat den Vorteil, daß eventuelle Veränderung der Polarisation durch die Reflexion an der metallischen Spiegelschicht kompensiert werden können.

An dieser Stelle wird darauf hingewiesen, daß lediglich zum besseren Verständnis von einer Anzeige eines Fehlers auf dem oder durch lichtempfindlichen Empfänger geredet wird. Dies soll so zu verstehen sein, daß der Fehler von dem lichtempfindlichen Empfänger aufgenommen wird und auf einem entsprechenden Anzeigemittel, beispielsweise einem mit dem lichtempfindlichen Empfänger verbundenen Monitor, bildlich dargestellt wird.

In einer weitergehenden Ausführungsform der Erfindung ist vorgesehen, daß der reflektierte oder hindurchgehende Lichtstrahl vor dem Eintritt in den lichtempfindlichen Empfänger aufgeteilt wird und ein Teil des Lichtstrahls in Richtung auf einen zweiten lichtempfindlichen Empfänger abgelenkt wird. Dies hat den Vorteil, daß nunmehr zwei lichtempfindliche Empfänger, die jeweils beispielsweise für die Anzeige von unterschiedlichen Fehlern besonders zweckmäßig sind, durch eine Lichtquelle und somit in einem Verfahrensschritt belichtet werden können.

In einer zweckmäßigen Ausgestaltung der Erfindung ist vorgesehen, daß der reflektierte oder hindurchgehende Lichtstrahl durch einen Strahlteiler, der zwischen dem ersten lichtempfindlichen Empfänger und dem Gegenstand angeordnet ist, aufgeteilt wird und ein Teil des Lichtstrahls in Richtung auf den zweiten lichtempfindlichen Empfänger abgelenkt wird. Dadurch kann ein einfacher und kompakter Aufbau der für die Durchführung der Verfahrens erforderlichen Vorrichtung erzielt werden.

Weiterhin kann vorgesehen werden, daß ein Teil des von dem Gegenstand reflektierten Lichtstrahls von einem teildurchlässigen Spiegel derart reflektiert wird, daß dieser Lichtstrahl gegenläufig unter einem im wesentlichen gleichen Winkel wie der Einfallswinkel auf den Gegenstand auftrifft, dort reflektiert wird und durch einen zwischen dem Gegenstand und der Lichtquelle angeordneten Strahlteiler trifft, in welchem ein Teil des Lichtstrahls in Richtung auf den zweiten lichtempfindlichen Empfänger abgelenkt wird. Diese Führung des Lichtstrahls hat den Vorteil, daß der Kontrast auf dem zweiten lichtempfindlichen Empfänger erhöht werden kann, da die CD bei gleicher, also bei einer unverdrehten Lage, sowohl von dem einfallenden als auch von dem durch den teildurchlässigen Spiegel reflektierten Lichtstrahl durchlaufen wird. Es können daher auch kontrastärmere Fehler, beispielsweise großflächige oder stochastische Fehler, die bei einem einmaligen Durchlauf des Lichtstrahls nur eine geringe Schwächung desselben bewirken, detektiert werden, da diese Fehler nunmehr den Lichtstrahl in seinem Verlauf zweimal abschwächen.

Zweckmäßig ist es dabei, wenn der Lichtstrahl linienförmig den Gegenstand beleuchtet. Dabei kann wenigstens ein lichtempfindlicher Empfänger als Zeilenkamera ausgebildet sein. Dadurch kann die Meßzeit reduziert werden, wobei die anderen Fehler der erstgenannten Fehlergruppe gleichzeitig erfaßt werden können.

Zweckmäßig kann es jedoch auch sein, wenn wenigstens ein lichtempfindlicher Empfänger als Matrixkamera ausgebildet ist. Mit einer Matrixkamera können die möglichen Verformungen einer CD gut sichtbar gemacht werden. Durch eine Verformung wird eine linienförmige Beleuchtung der CD auf der Matrixkamera, die einen flächigen Empfänger hat, als entsprechend gekrümmte Linie angezeigt. Es ist daher auch möglich, daß hut- oder wulstförmige Verformungen der CD erkannt werden können.

Neben den inneren Spannungen können auch eventuelle Verformungen sichtbar gemacht, da die für die Ausfilterung der Polarisationsart verwendete Polarisationseinrichtung so ausgerichtet und eingestellt ist, daß ein Lichtdurchgang dann gewährleistet ist, wenn keine Doppelbrechung vorliegt. Aus dem Verlauf des aufgenommen, ursprünglich linienförmigen Lichtstrahls kann auf eine eventuelle Verformung der CD geschlossen werden. Es ist somit möglich zwei unterschiedliche Meßprobleme in einem Vorgang zu lösen.

Zweckmäßig kann es insbesondere sein, wenn der erste lichtempfindliche Empfänger hinter dem teildurchlässigen Spiegel als Matrixkamera und der zweite lichtempfindliche Empfänger als Zeilenkamera ausgebildet ist.

Grundsätzlich ist es dabei zweckmäßig, daß vor der Matrixkamera die entsprechende, umgekehrte Polarisationseinrichtung und/oder das Farbfilter angeordnet ist. Bei dieser Anordnung ist es möglich, daß in der Matrixkamera die inneren Spannungen und die Verformungen aufgenommen werden, während die Zeilenkamera die anderen Fehler erfaßt.

Ferner kann vorgesehen werden, daß bei einem rotationssymmetrischen Gegenstand die Beleuchtung zumindest teilweise entlang einem von der Mittelachse ausgehenden Strahl erfolgt. Zweckmäßig kann es ferner sein, daß die Messungen über wenigstens eine vollständige Umdrehung des Gegenstandes erfolgen, wobei alle Meßwerte in einer elektronischen Datenverarbeitungsanlage verarbeitet werden, um ein im wesentlichen vollständiges Bild des geprüften Gegenstandes zu erzeugen. Dies vereinfacht eine Fehlerbeurteilung wesentlich.

Die Vorrichtung zur Qualititätskontrolle eines Gegenstandes mit wenigstens einer lichtdurchlässigen Schicht, insbesondere einer Compact-Disc (CD), ist mit einer Lichtquelle zur Erzeugung wenigstens eines Lichtstrahls, der in einem Winkel auf den Gegenstand fällt, und wenigstens einem lichtempfindlichen Empfänger zur Aufnahme des reflektierten oder hindurchgehenden Lichtstrahls versehen. Gemäß der Erfindung ist vorgesehen, daß zwischen der Lichtquelle und dem Gegenstand wenigstens eine Polarisationseinrichtung angeordnet ist und daß vor dem lichtempfindlichen Empfänger eine korrespondierende Polarisationseinrichtung vorgesehen ist, die so ausgerichtet ist, daß ein Lichtdurchgang bei einem hinsichtlich der Doppelbrechung im wesentlichen einwandfreien Gegenstand stattfindet. Mit dieser Vorrichtung kann in vorteilhafter Weise insbesondere das obenbeschriebene Verfahren durchgeführt werden. Es kann natürlich auch vorgesehen werden, daß die Lichtquelle bereits linear polarisiertes Licht erzeugt, beispielsweise durch die Verwendung eines Lasers.

Zweckmäßig kann es dabei sein, daß jede Polarisationseinrichtung ein lineares Polfilter und eine Verzögerungsplatte aufweist. Je nach Winkellage des linearen Polfilters zur Verzögerungsplatte, beispielsweise einer λ/4-Platte, kann hierbei elliptisch oder zirkular polarisiertes Licht erzeugt werden. Vor dem lichtempfindlichen Empfänger wird diese Polarisationsart durch die korrrespondierende Polarisationseinrichtung wieder herausgefiltert. Im Fall der Verwendung eines Lasers als Lichtquelle, der linear polarisiertes Licht ausstrahlt, müßte die Polarisationseinrichtung hinter der Lichtquelle nur noch eine Verzögerungsplatte aufweisen.

In einer weitergehenden Ausführungsform der Erfindung ist vorgesehen, daß wenigstens ein Mittel vorgesehen ist, um den von dem Gegenstand reflektierten oder den hindurchgehenden Lichtstrahl vor dem Eintritt in den ersten lichtempfindlichen Empfänger aufzuteilen und einen Teil in Richtung auf einen zweiten lichtempfindlichen Empfänger abzulenken. Dabei kann das Mittel zum Aufteilen des Lichtstrahls einen Strahlteiler aufweisen, der zwischen dem Gegenstand und dem ersten lichtempfindlichen Empfänger angeordnet ist. Es ist aber auch möglich, daß das Mittel zum Aufteilen des Lichtstrahls einen Strahlteiler aufweist, der zwischen dem Gegenstand und der Lichtquelle angeordnet ist, wobei vor dem ersten lichtempfindlichen Empfänger ein teildurchlässiger Spiegel angeordnet ist, der so ausgerichtet ist, um den Lichtstrahl entgegengesetzt in Richtung auf den Gegenstand zu reflektieren.

Für die Detektion von inneren Spannungen unabhängig von der Vorzugsrichtung der verursachten Doppelbrechung, ist es ferner vorgesehen, daß vor wenigstens einem lichtempfindlichen Empfänger eine Polarisationseinrichtung in umgekehrter Einbaulage angeordnet ist, um den Anteil des einfallenden Lichts auszufiltern, dessen Polarisationsart der Polarisationsart des gesendeten Lichts entspricht. Die Polarisationseinrichtung kann beispielsweise in Strahlrichtung eine Verzögerungsplatte und einen linearen Polfilter und aufweisen. Die Verzögerungsplatten vor dem lichtempfindlichen Empfänger beziehungsweise hinter der Lichtquelle arbeiten dabei mit der gleichen Wellenlänge. Dabei ist es für eine kontrastreichere Darstellung vorteilhaft, wenn vor der Verzögerungsplatte vor der Kamera ein Farbfilter angeordnet ist, dessen Wellenlänge der Wellenlänge des zirkular oder elliptisch polarisierten Lichts entspricht.

Bei der Verwendung eines teildurchlässigen Spiegels kann es zweckmäßig sein, diesen als Interferenzfilter auszubilden, dessen Wellenlänge der Wellenlänge des zirkular oder elliptisch polarisierten Lichts entspricht. Damit wird der restliche Anteil des Lichtes reflektiert, wodurch die für den anderen lichtempfindlichen Empfänger zur Verfügung stehende Lichtmenge weniger reduziert wird.

Zweckmäßig ist es in jedem Fall, wenn die Lichtquelle einen linienförmigen Lichtstrahl erzeugt. Dabei kann wenigstens ein lichtempfindlicher Empfänger eine Zeilenkamera sein. Es kann aber auch vorgesehen werden, daß wenigstens ein lichtempfindlicher Empfänger eine Matrixkamera ist.

Zweckmäßig ist es weiterhin, daß aufgrund der großen Menge der zu verarbeitenden Bildinformationen wenigstens ein lichtempfindlicher Empfänger mit einer Datenverarbeitungsanlage in Verbindung steht.

Vorstehend wurden verschiedene Ausführungsformen, insbesondere bezüglich der Kenntlichmachung der inneren Spannung, im Zusammenhang mit zwei lichtempfindlichen Empfängern beschrieben. Es ist selbstverständlich, daß sich diese Ausführungsformen auch auf die Vorrichtungen mit nur einem lichtempfindlichen Empfänger beziehen können.

Die Erfindung wird im folgenden anhand der schematischen Zeichnung näher erläutert. Es zeigen:
- Fig. 1: eine Draufsicht auf eine Compact-Disc,
- Fig. 2: einen Querschnitt einer Compact-Disc entlang der Linie II-II in Fig. 1,
- Fig. 3: in schematischer Darstellungsform die möglichen Fehler in einer Compact-Disc,
- Fig. 4: eine Draufsicht auf eine mit dem Lichtstrahl beleuchtete CD,
- Fig. 5: eine Vorrichtung gemäß der Erfindung,
- Fig. 6: eine andere Ausführungsform einer Vorrichtung gemäß der Erfindung und
- Fig. 7: eine weitere Ausführungsform einer Vorrichtung gemäß der Erfindung.

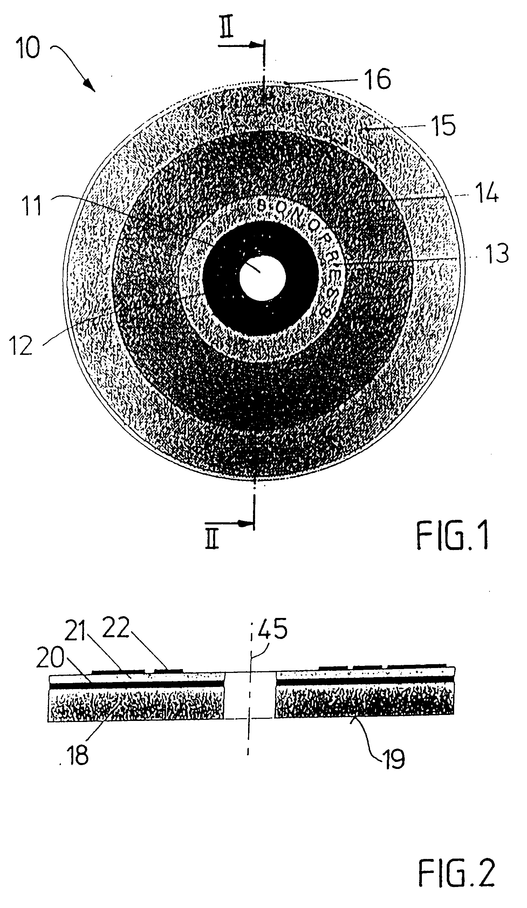

In den Fig. 1 und 2 ist schematisch der Aufbau einer CD 10 dargestellt. Wie in Fig. 1 ersichtlich, weist die CD 10 in radialer Richtung unterschiedliche Bereiche auf. Von innen nach außen sind zunächst das Kernloch 11 für die Zentrierung in dem Abspielgerät und der innere Randbereich 12 für das Verspannen mit der Abspielvorrichtung vorhanden. Daran schließt sich ein Bereich 13 für die Aufnahme des Ident-Codes an, der von dem eigentlichen Datenbereich 14 umgeben wird. Je nach Füllungsgrad mit Informationen kann sich an den Datenbereich 14 ein Lead-Out 15 oder unmittelbar der äußere Randbereich 16 anschließen.

In axialer Richtung (Fig. 2) weist die CD 10 von unten nach oben gesehen eine lichtdurchlässige Polycarbonatschicht 18 auf, die auf der der Unterseite 19 abgewandten Seite mit einer Metallschicht 20 versehen ist. Dadurch entsteht eine spiegelnde Oberfläche, so daß die innerhalb der Polycarbonatschicht in Form von Vertiefungen (nicht dargestellt) gespeicherten Daten von der Unterseite 19 her in dem Abspielgerät durch optische Mittel abgetastet werden können. Die Metallschicht 20 ist auf ihrer der Polycarbonatschicht 18 abgewandten Seite mit einer Lackschicht 21 versiegelt, auf welcher eine Farbschicht 22 als Label aufgedruckt sein kann.

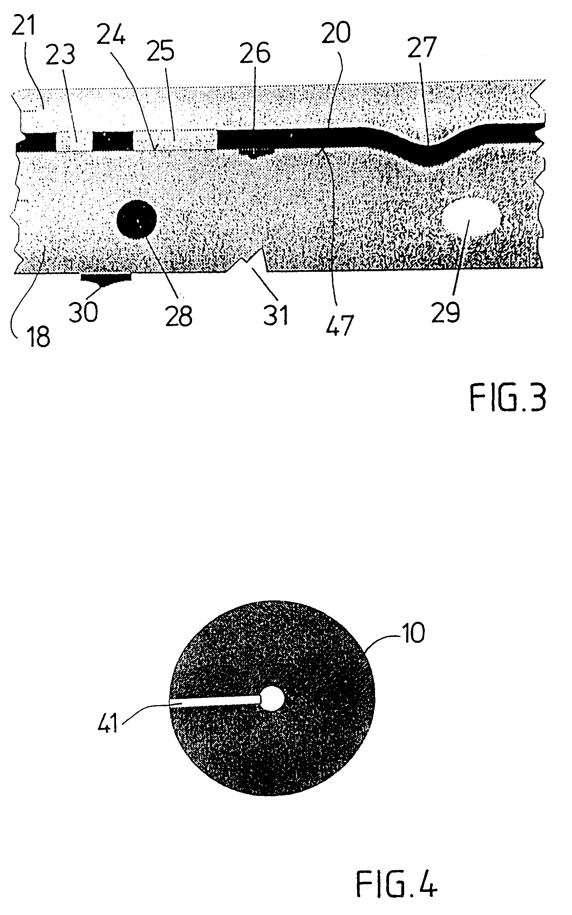

In Fig. 3 sind die möglichen Fehler dargestellt, die bei der Herstellung einer CD auftreten und durch übliche Meßmethoden sichtbar gemacht werden können. Mit dem Bezugszeichen 23 sind sogenannte Pinholes dargestellt, die durch Staubkörner auf der Oberfläche 24 des Rohlings der Polycarbonatschicht liegen und sich beim Zentrifugieren während des Sputtervorganges von der Oberfläche lösen und dabei ein Stück der metallischen Schicht 20 mitreißen. Die sogenannten Alukratzer 25 entstehen auf die gleiche Weise, jedoch wandert das Staubkorn zunächst noch auf der Oberfläche 24 weiter nach außen. Die Ölflecke 26 sind organische Rückstände auf der Oberfläche 24 der Polycarbonatschicht 18 der CD 10. Ein sogenannter Pickel 27 entsteht durch eine Verformung des Polycarbonatrohlings 18. Ferner können noch schwarze Punkte 28 durch Fremdkörpereinschlüsse oder Bläschen 29 durch Gaseinschlüsse innerhalb der Polycarbonatschicht 18 vorhanden sein. Auf der Unterseite 19 der Polycarbonatschicht treten als Fehler Lackspritzer 30 oder Kratzer 31 durch äußere mechanische Einwirkungen auf.

Diese Fehler bewirken einen verminderten Lichtdurchgang des Prüflichtstrahls, so daß bei der bildlichen Darstellung an den betreffenden Stellen schwarze oder dunklere Bereiche sichtbar werden. Die anderen Fehler, die oben beschrieben worden sind, können zeichnerisch nicht ohne weiteres dargestellt werden. Dennoch bewirken sie teilweise eine schwächere Belichtung des lichtempfindlichen Empfängers oder eine Ablenkung des Prüflichtstrahls.

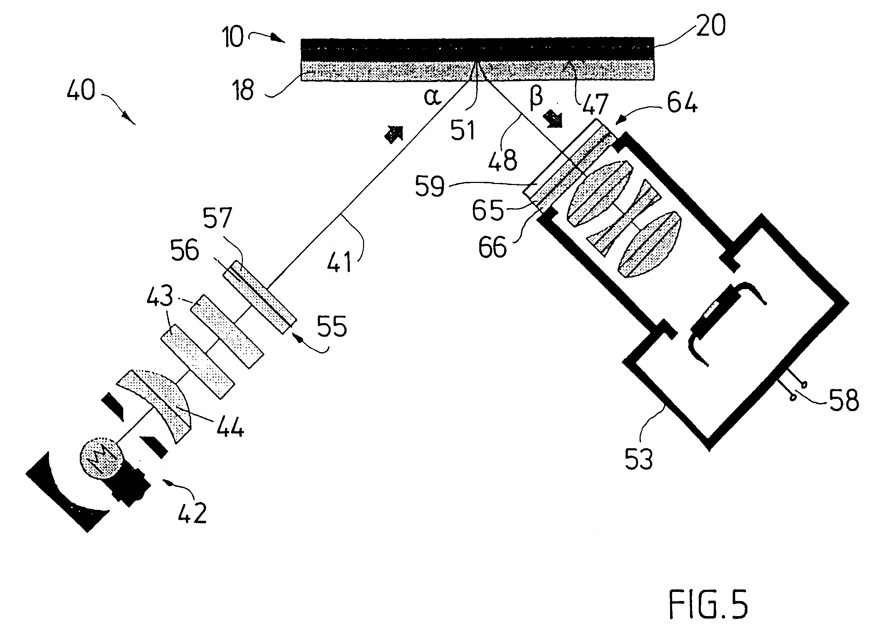

In der Fig. 5 ist eine Vorrichtung 40 zur Qualitätskontrolle von CD's 10 schematisch dargestellt. Die Zeichnung beschränkt sich auf die Darstellung des Strahlenverlaufs des Lichtstrahls 41, da dem Fachmann aus dieser Darstellung der erforderliche Aufbau mit den einzuhaltenden Winkeln und dergleichen ohne weiteres bekannt ist.

Die Vorrichtung 40 weist eine Lichtquelle 42 auf, die beispielsweise als herkömmliche Halogenleuchte ausgebildet sein kann. Durch die Anordnung verschiedener, allgemein bekannter Blenden und Linsen 43, 44 kann ein in bezug auf die Oberfläche der CD 10 linienförmiger Lichtstrahl 41 erzeugt werden, der auf die Unterseite 19, die Leseseite, der CD 10 in Form eines radial von der Mittelachse 45 ausgehenden Strahls auftrifft. Die CD dreht sich während des Prüfens um diese Mittelachse 45. Die linienförmige Beleuchtung der CD 10 ist in Fig. 4 dargestellt. Es ist natürlich auch möglich, daß sich der Lichtstrahl über den gesamten Durchmesser der CD 10 erstreckt. In diesem Fall wäre für eine vollständige Prüfung der CD 10 nur eine halbe Umdrehung derselben erforderlich.

In Richtung des Verlaufs des Lichtstrahls 41 ist zwischen der Lichtquelle 42 und der CD 10 eine Polarisationseinrichtung 55 vorgesehen, die einen linearen Polfilter 56 und eine Verzögerungsplatte 57, beispielsweise eine λ/4-Platte, aufweist, um zumindest einen Wellenlängenbereich des Lichtstrahls 41 zirkular oder elliptisch zu polarisieren. Dies bedeutet, daß zumindest eine Wellenlänge des ausgesendeten Lichts entsprechend polarisiert wird. Der Lichtstrahl 41 trifft auf die Unterseite 19 der lichtdurchlässigen Schicht 18, der Polycarbonatschicht, der CD und wird dort nach den optischen Eigenschaften dieser Schicht 18 gebrochen. Der Einfallswinkel α ist dabei so gewählt, daß keine Totalreflexion an der Unterseite 19 der Polycarbonatschicht 18 auftritt und kann zwischen 30° und 60° liegen. Es ist aber auch ein Einfallswinkel von 90° grundsätzlich möglich, jedoch wird ein spitzer Einfallswinkel bevorzugt. An der durch die metallische Schicht 20 gebildeten verspiegelten Oberfläche 47 wird der Lichtstrahl 41 reflektiert und tritt nach entsprechender Brechung unter dem gleichen Ausfallswinkel β wieder aus der Polycarbonatschicht 18 hinaus.

Im weiteren Verlauf des reflektierten Lichtstrahls 48 ist ein lichtempfindlicher Empfänger 53 angeordnet. Je nach Ausführungsform und Art der zu detektierenden Fehler kann der lichtempfindliche Empfänger als Zeilen- oder Matrixkamera ausgebildet sein.

Bei dem in Fig. 5 dargestellten Ausführungsbeispiel ist zwischen der CD 10 und dem Iichtempfindlichen Empfänger 53 eine Polarisationseinrichtung 64 in umgekehrter Reihenfolge angeordnet, die in Strahlrichtung eine Verzögerungsplatte 65, beispielsweise eine λ/4-Platte, und ein lineares Polfilter 66 aufweist. Ferner kann vor der Verzögerungsplatte 65 ein Farbfilter 59 angeordnet sein. Die Verzögerungsplatte 57 und die Verzögerungsplatte 65 sowie das Farbfilter 59 weisen die gleiche Wellenlänge auf. Dadurch können auf dem lichtempfindlichen Empfänger 53 innere Spannungen unabhängig von der Vorzugsrichtung der verursachten Doppelbrechung sichtbar gemacht werden. Die linearen Polfilter und die Verzögerungsplatten hinter der Lichtquelle einerseits und vor dem lichtempfindlichen Empfänger andererseits sind dabei so ausgerichtet, daß ein Lichtdurchgang bei einer hinsichtlich der Doppelbrechung einwandfreien CD erfolgt.

Grundsätzlich können die inneren Spannungen durch jede Art von polarisiertem Licht kenntlich gemacht werden. Um eine vielseitige Anwendung des Prüfverfahrens zu ermöglichen, ist vorgesehen, daß die verwendeten Polfilter vor der Lichtquelle einerseits und vor dem lichtempfindlichen Empfänger andererseits so ausgerichtet sind, daß ein Lichtdurchgang, vorzugsweise der maximale Lichtdurchgang, bei einem einwandfreien zu prüfenden Gegenstand erfolgt, so daß in dem betreffenden lichtempfindlichen Empfänger neben der Doppelbrechung noch andere Fehlerphänomene beobachtet werden können. In Abhängigkeit von der Bedeutung eventueller Fehler des Gegenstandes kann beispielsweise die Zeilenkamera oder auch die Matrixkamera mit dem korrespondierenden Polfilter versehen sein.

Vorstehend wurde überwiegend von der Verwendung von linear oder zirkular polarisiertem Licht gesprochen. Es ist natürlich auch möglich, daß durch eine entsprechende Ausrichtung des linearen Polfilters und der Verzögerungsplatte (λ/4-Platte) vor der Lichtquelle elliptisch polarisiertes Licht erzeugt wird. Dies hat den Vorteil, daß die durch die metallische Spiegelschicht erzeugte Veränderung der Polarisationsrichtung kompensiert werden kann. Die Veränderung der Polarisationsrichtung durch die Spiegelung sind physikalisch bekannte Vorgänge, so daß der erforderliche Winkel zwischen linearem Polfilter einerseits und Verzögerungsplatte andererseits ohne weiteres ermittelbar ist. Die Verdrehung um einen von 45° abweichenden Winkel wird dabei so gewählt, daß eventuelle Doppelbrechungen unabhängig von der Vorzugsrichtung angezeigt werden können. Die Verzögerungsplatte und das Polfilter vor dem lichtempfindlichen Empfänger sind dann entsprechend zueinander ausgerichtet.

Für die Sichtbarmachung der mikrostrukturellen Fehler, der sogenannten Wolken, ist die vor dem lichtempfindlichen Empfänger angeordnete Polarisationseinrichtung 64 nicht zwingend erforderlich. In diesem Fall kann der lichtempfindliche Empfänger 53 beispielsweise als Zeilenkamera ausgebildet sein. Die Zeilenkamera weist in bekannter Weise einen zeilenförmigen Empfänger auf, der von dem linienförmigen Lichtstrahl zumindest teilweise belichtet wird. Eventuelle Fehler der CD 10 werden durch entsprechend dunkle oder schwächer belichtete Stellen sichtbar.

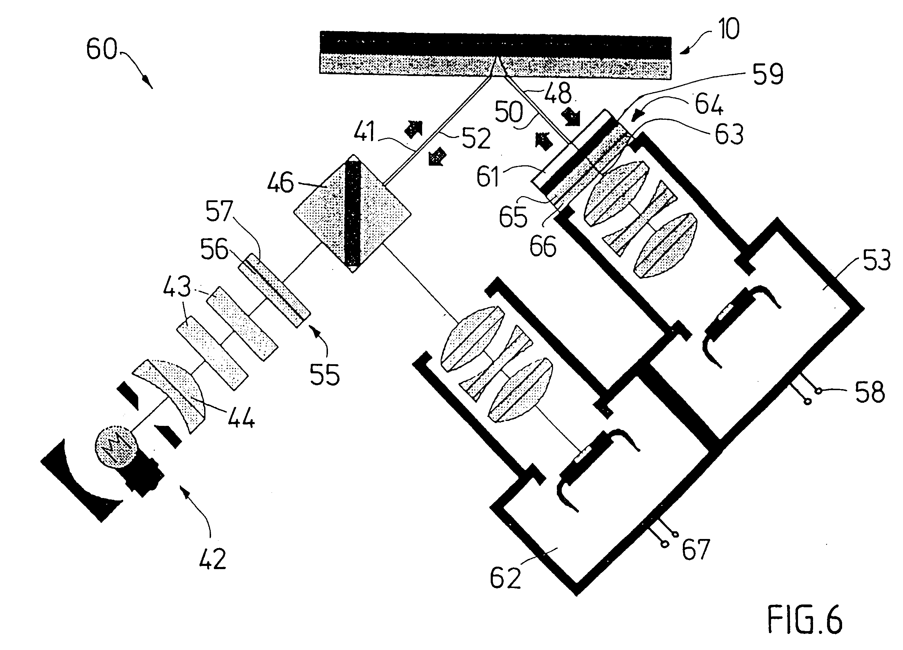

In Fig. 6 ist eine weitergehende Ausführungsform der Erfindung dargestellt, die zumindest teilweise dem Ausführungsbeispiel gemäß Fig. 5 entspricht. Es werden daher gleiche Teile oder Elemente mit gleichen Bezugszeichen versehen.

Bei der in Fig. 6 gezeigten Vorrichtung 60 ist vor dem lichtempfindlichen Empfänger 53 ein teildurchlässiger Spiegel 61 angeordnet. Bei dieser Anordnung wird demnach nur ein Teil 63 des von der verspiegelten Oberfläche 47 der CD 10 reflektierten Lichtstrahls 48 zu dem ersten lichtempfindlichen Empfänger 53 durchgelassen, während der andere Teil durch den teildurchlässigen Spiegel 61 genau entgegengesetzt reflektiert wird, so daß ein zu dem reflektierten Lichtstrahl 48 entgegengesetzt verlaufender Lichtstrahl 50 gebildet wird. Um Mißverständnissen vorzubeugen, wird darauf hingewiesen, daß lediglich zur Verdeutlichung der unterschiedlichen Lichtstrahlen diese nebeneinander gezeichnet sind. Bei korrekt eingestellter Optik und unverformter CD verlaufen die Lichtstrahlen zumindest näherungsweise übereinander.

Dieser Lichtstrahl 50 wird wiederum entsprechend den optischen Eigenschaften der lichtdurchlässigen Schicht 18 gebrochen und an der verspiegelten Oberfläche an näherungsweise demselben Punkt 51, an dem bereits der einfallende Lichtstrahl 41 gespiegelt worden ist, ebenfalls reflektiert. Der austretende Lichtstrahl 52 trifft auf einen Strahlteiler 46, der zwischen der CD 10 und der Lichtquelle angeordnet ist. Dort erfährt ein Teil des Lichtstrahls eine Ablenkung, beispielsweise um 90°. Der Strahlteiler 46 ist dabei so ausgebildet, daß der originäre, unmittelbar von der Lichtquelle 42 ausgehende Lichtstrahl 41 nicht abgelenkt wird. In Ablenkungsrichtung hinter dem Strahlteiler 46 ist ein zweiter lichtempfindlicher Empfänger 62 angeordnet.

Mit dieser Vorrichtung ist es möglich, mit einer Lichtquelle und mit einem linienförmigen ausgesendeten Lichtstrahl 41, also während eines Prüfvorganges, zwei Kameras gleichzeitig zu belichten, so daß unterschiedliche Fehler, die unterschiedliche Kameratypen erfordern, erkannt werden können. Da der Lichtstrahl 41 nunmehr durch den teildurchlässigen Spiegel 61 und den Strahlteiler 46 aufgeteilt wird, ist es zweckmäßig, eine stärkere Lichtquelle 42 vorzusehen.

Mit dem ersten lichtempfindlichen Empfänger 53, beispielsweise einer Matrixkamera, können dann beispielsweise Verformungen der CD 10 erkannt werden. Vorteilhaft ist es, daß hinter dem teildurchlässigen Spiegel die Polarisationseinrichtung 64 angeordnet ist, so daß in der Matrixkamera neben der Verformung der CD 10 auch noch eventuelle innere Spannungen sichtbar gemacht werden können. Dabei ist es zweckmäßig, wenn der teildurchlässige Spiegel als Interferenzfilter ausgebildet ist. In diesem Fall kann das Farbfilter 59 weggelassen werden.

Vor dem zweiten lichtempfindlichen Empfänger 62, beispielsweise einer Zeilenkamera ist keine derartige Polarisationseinrichtung vorgesehen. Dort werden neben den Fehlern der erstgenannten Fehlergruppe auch die sogenannten Wolken sichtbar. Aufgrund der Anordnung gemäß Fig. 6 wird die CD 10 in einer Meßlage, d. h. , daß die CD 10 keine weitere Drehung durchführt, zweimal von dem Lichtstrahl bis zu dessen Auftreffen auf den lichtempfindlichen Empfänger 62 durchlaufen, nämlich einmal von dem originären Lichtstrahl 41 und zum zweiten Mal von dem an dem teildurchlässigen Spiegel 61 reflektierten Lichtstrahl 50. Es ist offensichtlich, daß dadurch auch kontrastärmere Fehler sichtbar gemacht werden können, da derselbe Lichtstrahl zweimal durch den Fehler abgeschwächt wird, wodurch der Kontrast im Vergleich zu den daneben verlaufenden ungestörten Strahlen erhöht wird.

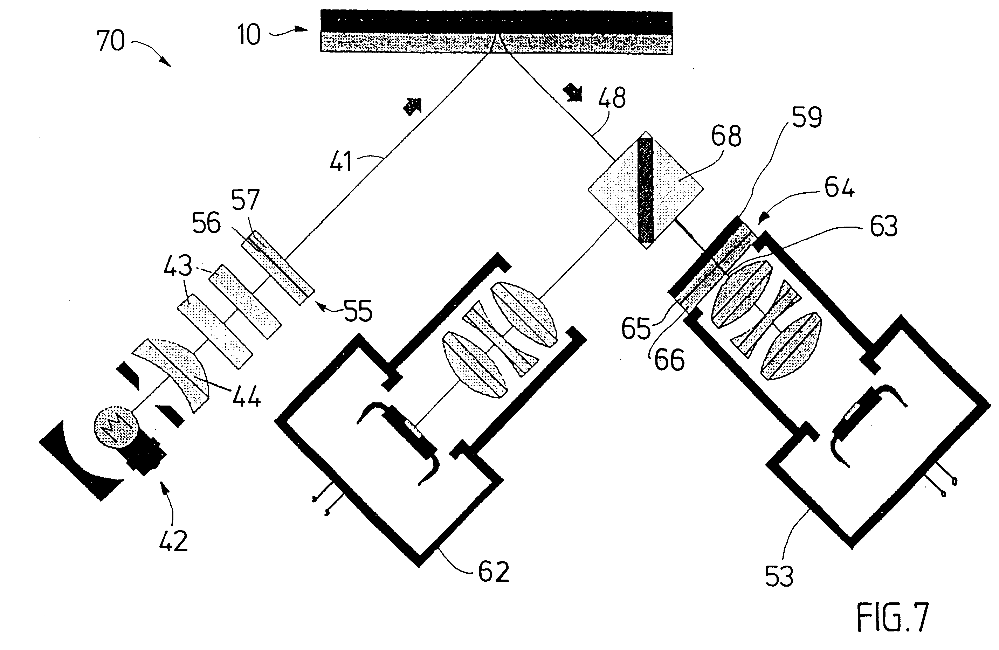

In Fig. 7 ist eine andere Ausführungsform der Erfindung dargestellt, die zumindest teilweise den Ausführungsbeispielen gemäß den Fig. 6 und 7 entspricht. Es werden daher gleiche Teile oder Elemente mit gleichen Bezugszeichen versehen. Bei der Vorrichtung 70 gemäß dieser Ausführungsform ist ein Strahlteiler 68 zwischen dem ersten lichtempfindlichen Empfänger 53 und der CD 10 angeordnet. In Ablenkungsrichtung des Strahlteilers ist der zweite lichtempfindliche Empfänger 62 angeordnet. Bei dieser Ausführungsform wird der von dem Gegenstand 10 reflektierte Lichtstrahl 48 unmittelbar aufgeteilt. Dies hat den Vorteil, daß das Licht durch den ansonsten wiederholten Durchlauf des Lichtstrahls durch die CD 10 nicht mehr so stark geschwächt wird. Ansonsten gelten die gleichen Ausführungen wie zu dem Ausführungsbeispiel gemäß Fig. 6. Diese Ausführungsform kann bei manchen räumlichen Gegebenheiten der Meßvorrichtung zweckmäßig sein. Insbesondere ist es auch hier möglich, daß mit einem Lichtstrahl zwei unterschiedliche Kameras für die Detektion von unterschiedlichen Fehlern belichtet werden.

Es kann bei beiden gezeigten Ausführungsformen gemäß den Fig. 6 und 7 auch vorgesehen werden, daß der Strahlteiler 46, 68 als Polarisationsstrahlteiler ausgebildet ist. Für die Erzeugung von zirkular oder elliptisch polarisiertem Licht in zumindest einem Wellenlängenbereich wäre dann die Verzögerungsplatte 57 hinter dem Strahlteiler 46 anzuordnen. Je nach Ausrichtungsart und der Anordnung des Polarisationsstrahlteilers sind dann beide lichtempfindliche Empfänger von dem Durchlauf des Lichts durch den dadurch gebildeten Polfilter betroffen. Dies kann jedoch bei einer Auswertung ohne weiteres berücksichtigt werden.

In der Zeichnung sind als Ausführungsbeispiele nur Vorrichtungen dargestellt, bei welchem der Lichtstrahl an der verspiegelten Schicht reflektiert wird. Es ist natürlich auch ein Aufbau möglich, bei welchem der Lichtstrahl durch den durchsichtigen Rohling hindurchtritt. In diesem Fall wäre der entsprechende lichtempfindliche Empfänger und ggf. die Mittel zur Strahlaufteilung auf der der Lichtquelle gegenüberliegenden Seite der CD anzuordnen.

### Bezugszeichenliste:

- 10: Compact-Disc (CD)
- 11: Kernloch
- 12: innerer Randbereich
- 13: Ident-Code-Bereich
- 14: Datenbereich
- 15: Lead-Out
- 16: äußerer Randbereich
- 18: lichtdurchlässige Schicht
- 19: Unterseite
- 20: Metallschicht
- 21: Lackschicht
- 22: Farbschicht
- 23: Pinhole
- 24: Oberfläche
- 25: Alukratzer
- 26: Ölfleck
- 27: Pickel
- 28: Schwarzer Punkt
- 29: Bläschen
- 30: Lackspritzer
- 31: Kratzer
- 40: Vorrichtung
- 41: Lichtstrahl
- 42: Lichtquelle
- 43: Blenden
- 44: Linsensystem
- 45: Mittelachse
- 46: Strahlteiler
- 47: verspiegelte Oberfläche
- 48: ausfallender Lichtstrahl
- 49: Spiegelelement
- 50: reflektierter Lichtstrahl
- 51: Spiegelpunkt
- 52: ausfallender Lichtstrahl
- 53: erster lichtempfindlicher Empfänger
- 55: Polarisationseinrichtung
- 56: lineares Polfilter
- 57: Verzögerungsplatte
- 58: Videoausgang
- 59: Farbfilter
- 60: Vorrichtung
- 61: teildurchlässiger Spiegel
- 62: zweiter lichtempfindlicher Empfänger
- 63: Lichtstrahl
- 64: Polarisationseinrichtung
- 65: Verzögerungsplatte
- 66: lineares Polfilter
- 67: Videoausgang
- 68: Strahlteiler
- 70: Vorrichtung
- α: Einfallswinkel
- β: Ausfallswinkel

## Patentansprüche

1. Verfahren zur Qualitätskontrolle eines Gegenstandes (10), der wenigstens eine lichtdurchlässige Schicht (18) aufweist, insbesondere einer Compact-Disc (CD), bei welchem Verfahren wenigstens ein Lichtstrahl (41) einer Lichtquelle (42) in einem Einfallswinkel (α) auf den Gegenstand (10) aufgebracht und der reflektierte oder der hindurchgehende Lichtstrahl (48) von einem lichtempfindlichen Empfänger (53) aufgenommen wird, dadurch gekennzeichnet, daß der Lichtstrahl hinter der Lichtquelle durch eine Polarisationseinrichtung (55) zumindest in einem Wellenlängenbereich polarisiert wird und das von dem Gegenstand kommende Licht vor dem lichtempfindlichen Empfänger eine korrespondierende Polarisationseinrichtung (64) durchläuft, die so ausgerichtet ist, daß ein Lichtdurchgang bei einem im wesentlichen fehlerfreien Gegenstand stattfindet.

2. Verfahren nach Anspruch 1, dadurch gekennzeichnet, daß der Lichtstrahl in zumindest einem Wellenlängenbereich zirkular polarisiert wird, wobei vor dem lichtempfindlichen Empfänger eine korrespondierende Anordnung einer λ/4-Platte (65) und eines linearen Polfilters (66) vorgesehen ist.

3. Verfahren nach Anspruch 1 oder 2, dadurch gekennzeichnet, daß zumindest ein Wellenlängenbereich des Lichtstrahls elliptisch polarisiert wird, wobei vor dem lichtempfindlichen Empfänger eine korrespondierende Anordnung einer Verzögerungsplatte (65) und eines linearen Polfilters (66) vorgesehen ist.

4. Verfahren nach einem der Ansprüche 1 bis 3, dadurch gekennzeichnet, daß der von dem Gegenstand kommende Lichtstrahl (48) vor dem Eintritt in den ersten lichtempfindlichen Empfänger (53) aufgeteilt wird, und ein Teil des Lichtstrahls in Richtung auf einen zweiten lichtempfindlichen Empfänger (62) abgelenkt wird.

5. Verfahren nach einem der Ansprüche 1 bis 4, dadurch gekennzeichnet, daß ein Teil des von dem Gegenstand kommenden Lichtstrahls (48) durch einen Strahlteiler (68), der zwischen dem ersten lichtempfindlichen Empfänger (53) und dem Gegenstand (10) angeordnet ist, in Richtung auf den zweiten lichtempfindlichen Empfänger (62) abgelenkt wird.

6. Verfahren nach einem der Ansprüche 1 bis 4, dadurch gekennzeichnet, daß der von dem Gegenstand kommende Lichtstrahl (48) von einem teildurchlässigen Spiegel (61) derart reflektiert wird, daß der Lichtstrahl (50) gegenläufig unter einem im wesentlichen gleichen Winkel (β) wie der Einfallswinkel (α) auf den Gegenstand (10) auftrifft, dort reflektiert wird und durch einen zwischen dem Gegenstand (10) und der Lichtquelle (42) angeordneten Strahlteiler (46) trifft, in welchem ein Teil des Lichtstrahls in Richtung auf den zweiten lichtempfindlichen Empfänger (62) abgelenkt wird.

7. Verfahren nach einem der Ansprüche 1 bis 6, dadurch gekennzeichnet, daß die korrespondierende Polarisationseinrichtung vor nur einem lichtempfindlichen Empfänger angeordnet ist.

8. Verfahren nach einem der Ansprüche 1 bis 7, dadurch gekennzeichnet, daß aus dem Lichtstrahl (63) vor dem Eintritt in wenigstens einen lichtempfindlichen Empfänger (53) derjenige Wellenlängenbereich ausgefiltert wird, dessen Wellenlänge dem zirkular beziehungsweise dem elliptisch polarisierten Wellenlängenbereich des gesendeten Lichts entspricht.

9. Vorrichtung (40, 60, 70) zur Qualititätskontrolle eines Gegenstandes (10), der wenigstens eine lichtdurchlässige Schicht (18) aufweist, insbesondere einer Compact-Disc (CD), mit einer Lichtquelle (42) zur Erzeugung wenigstens eines Lichtstrahls (41), der in einem Einfallswinkel (α) auf den Gegenstand (10) fällt, und einem lichtempfindlichen Empfänger (53) zur Aufnahme des reflektierten oder hindurchgehenden Lichtstrahls, dadurch gekennzeichnet, daß zwischen der Lichtquelle (42) und dem Gegenstand (10) wenigstens eine Polarisationseinrichtung (55) angeordnet ist und daß vor dem lichtempfindlichen Empfänger eine korrespondierende Polarisationseinrichtung (64) vorgesehen ist, die so ausgerichtet ist, daß ein Lichtdurchgang bei einem im wesentlichen hinsichtlich der Doppelbrechung einwandfreien Gegenstand stattfindet.

10. Vorrichtung nach Anspruch 9, dadurch gekennzeichnet, daß die Polarisationseinrichtung (55) hinter der Lichtquelle und die korrespondierende Polarisationseinrichtung (64) vor dem lichtempfindlichen Empfänger jeweils wenigstens einen linearen Polfilter (56, 66) und eine Verzögerungsplatte (57, 65) aufweisen, um elliptisch oder zirkular polarisieres Licht zu erzeugen beziehungsweise auszufiltern.

11. Vorrichtung nach Anspruch 9 oder 10, dadurch gekennzeichnet, daß wenigstens ein Mittel vorgesehen ist, um den von dem Gegenstand (10) kommenden Lichtstrahl vor dem Eintritt in den ersten lichtempfindlichen Empfänger (53) aufzuteilen und einen Teil in Richtung auf einen zweiten lichtempfindlichen Empfänger (62) abzulenken.

12. Vorrichtung nach einem der Ansprüche 9 bis 11, dadurch gekennzeichnet, daß das Mittel zum Aufteilen des Lichtstrahls einen Strahlteiler (68) aufweist, der zwischen dem Gegenstand (10) und dem ersten lichtempfindlichen Empfänger (53) angeordnet ist.

13. Vorrichtung nach einem der Ansprüche 9 bis 11, dadurch gekennzeichnet, daß das Mittel zum Aufteilen des Lichtstrahls einen Strahlteiler (46) aufweist, der zwischen dem Gegenstand (10) und der Lichtquelle (42) angeordnet ist, wobei vor dem ersten lichtempfindlichen Empfänger (53) ein teildurchlässiger Spiegel (61) angeordnet ist, der so ausgerichtet ist, um den Lichtstrahl entgegengesetzt in Richtung auf den Gegenstand (10) zu reflektieren.

14. Vorrichtung nach einem der Ansprüche 9 bis 13, dadurch gekennzeichnet, daß die korrespondierende Polarisationseinrichtung vor nur einem lichtempfindlichen Empfänger angeordnet ist.

15. Vorrichtung nach einem der Ansprüche 9 bis 14, dadurch gekennzeichnet, daß vor wenigstens einem lichtempfindlichen Empfänger (62) vor der korrespondierenden Polarisationseinrichtung (64) ein Farbfilter (59) angeordnet ist, dessen Wellenlängenbereich dem Wellenlängenbereich des zirkular beziehungsweise elliptisch polarisierten Lichts entspricht.

16. Vorrichtung nach einem der Ansprüche 9 bis 15, dadurch gekennzeichnet, daß der teildurchlässige Spiegel (61) als Interferenzfilter ausgebildet ist, dessen Wellenlängenbereich dem Wellenlängenbereich des zirkular beziehungsweise elliptisch polarisierten Lichts entspricht, und hinter dem Interferenzfilter in Strahlrichtung eine Verzögerungsplatte (65) und ein lineares Polfilter (66) angeordnet ist.

17. Vorrichtung nach einem der Ansprüche 9 bis 16, dadurch gekennzeichet, daß der Strahlteiler (46, 68) als Polarisationsstrahlteiler ausgebildet ist.

18. Vorrichtung nach einem der Ansprüche 9 bis 17, dadurch gekennzeichnet, daß wenigstens ein lichtempfindlicher Empfänger als Zeilenkamera ausgebildet ist.

19. Vorrichtung nach einem der Ansprüche 9 bis 18, dadurch gekennzeichnet, daß wenigstens ein lichtempfindlicher Empfänger als Matrixkamera ausgebildet ist.
